(19) Europäisches Patentamt
European Patent Office
Office européen des brevets

(11) **EP 1 718 992 B1**

(12) **FASCICULE DE BREVET EUROPEEN**

(45) Date de publication et mention
de la délivrance du brevet:
**15.08.2007 Bulletin 2007/33**

(51) Int Cl.:
**G01T 3/00** $^{(2006.01)}$

(21) Numéro de dépôt: **05717718.0**

(22) Date de dépôt: **22.02.2005**

(86) Numéro de dépôt international:
**PCT/FR2005/050116**

(87) Numéro de publication internationale:
**WO 2005/085905 (15.09.2005 Gazette 2005/37)**

(54) **CIRCUIT ELECTRONIQUE DE DIAGNOSTIC DE SPECTROMETRIE ET CHAINE DE COMPTAGE ASSOCIEE**

ELEKTRONISCHE SPEKTROMETRIE-DIAGNOSESCHALTUNG UND ASSOZIIERTE ZÄHLENDE KETTE

ELECTRONIC SPECTROMETRY DIAGNOSTIC CIRCUIT AND ASSOCIATED COUNTING CHAIN

(84) Etats contractants désignés:
**AT BE BG CH CY CZ DE DK EE ES FI FR GB GR HU IE IS IT LI LT LU MC NL PL PT RO SE SI SK TR**

(30) Priorité: **24.02.2004 FR 0450338**

(43) Date de publication de la demande:
**08.11.2006 Bulletin 2006/45**

(73) Titulaire: **COMMISSARIAT A L'ENERGIE ATOMIQUE**
**75015 Paris (FR)**

(72) Inventeurs:
• **JOUVE, Michel**
  **F-13510 EGUILLES (FR)**
• **MAZON, Didier**
  **F-04100 MANOSQUE (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 396 464**          **FR-A- 2 686 158**
**GB-A- 2 332 512**          **RU-C- 2 162 236**

## Description

### Domaine Technique et art antérieur

La présente invention concerne un circuit électronique de diagnostic de spectrométrie.

L'invention concerne également une chaîne de comptage de particules qui comprend un circuit électronique de diagnostic de spectrométrie selon l'invention. La chaîne de comptage peut être, par exemple, une chaîne de comptage neutronique de réacteur de fusion ou de fission nucléaire contrôlée.

La fusion nucléaire contrôlée est une solution alternative séduisante et inépuisable pour la production d'électricité. Le but de la fusion contrôlée est de reproduire, sur Terre, l'énergie produite par le Soleil. L'énergie est alors produite à l'intérieur d'un appareil communément appelé tokamak. Un tokamak est un appareil permettant de confiner puissamment un anneau de gaz ionisé à très haute température, appelé plasma, par l'action combinée d'un champ magnétique élevé et d'un courant électrique intense de plusieurs mega-ampères. Le plasma développe en son sein des réactions de fusion deutérium/tritium productrices de neutrons qui véhiculent de l'énergie. Une optimisation des contraintes physiques, technologiques et de rentabilité a abouti à la définition du concept de « tokamak avancé » qui consiste en la mise en oeuvre de régimes à confinement stationnaire dans lesquels la totalité du courant est générée de façon non-inductive et, pour une grande partie, par un courant auto-généré par le plasma communément appelé « courant de bootstrap ».

La mise en oeuvre des régimes de type « tokamak avancé » nécessite la capacité de générer et de contrôler le courant de bootstrap. Parmi les différentes méthodes connues, l'injection, dans le plasma, d'ondes électromagnétiques de forte puissance constitue une méthode très performante pour la génération non inductive de courant dans un tokamak. Il est alors nécessaire de contrôler le profil de dépôt de puissance des ondes électromagnétiques. La mesure du rayonnement de freinage émis, dans la gamme des rayons X durs, par les électrons suprathermiques accélérés par l'onde hybride (principale onde électromagnétique qui génère le courant non inductif dans le Tokamak) est une méthode efficace pour accéder à des informations sur le dépôt de puissance de l'onde hybride. Dans le cas, par exemple, d'un contrôle de profil de courant sur de longues durées *[cf.* Peysson et al. « Revue of Science Instrument », page 70, n°10, 1999]*, la propagation et l'absorption de l'onde hybride sont étudiées au moyen d'un diagnostic de tomographie X à haute énergie et à très hautes résolutions spatiale et temporelle. Le système tomographique comporte au total 59 lignes de visée, les 59 détecteurs étant répartis en deux caméras, l'une horizontale, l'autre verticale, permettant d'augmenter la redondance spatiale des mesures, en quadrillant la section du plasma avec des lignes de visées d'inclinaison très différentes. Le diagnostic mesure l'émissivité du plasma intégrée le long de chaque ligne de visée, l'objectif principal étant de déterminer le profil radial d'émissivité du plasma à partir de toutes les mesures intégrées. Ceci peut s'effectuer, sous certaines hypothèses, par une méthode d'inversion d'Abel.

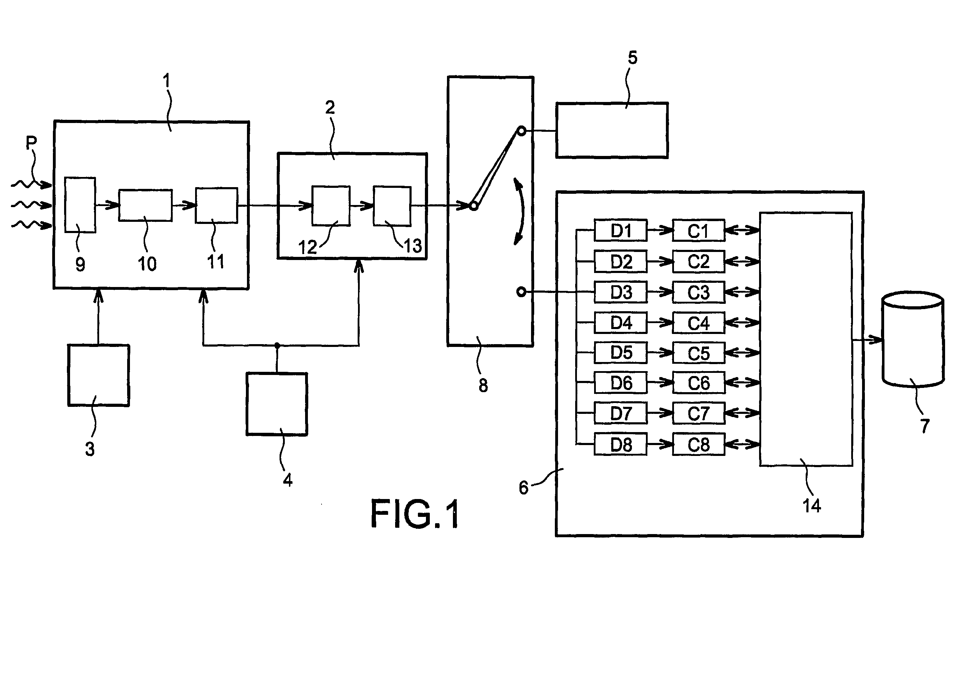

La figure 1 illustre, pour une voie, un schéma de principe de chaîne de mesure de diagnostic de spectrométrie par rayons X durs selon l'art antérieur.

La chaîne de mesure comprend une caméra 1, un châssis récepteur 2, un circuit de polarisation 3, un circuit d'alimentation 4, un circuit de calibration 5, un circuit de traitement 6 et une unité de stockage de données 7. Un commutateur 8 permet de relier la sortie du châssis récepteur 2 soit à l'entrée du circuit de traitement 6 (c'est alors la phase de mesure), soit à l'entrée du circuit de calibration 5 (c'est alors la phase de calibration). La caméra 1 comprend un détecteur 9 à base de semi-conducteur en Tellure de Cadmium (CdTe), un préamplificateur 10 et un émetteur différentiel 11. Le châssis récepteur 2 comprend un récepteur différentiel 12 et un amplificateur linéaire 13. Le circuit de polarisation 3 polarise le détecteur avec, par exemple, une tension de polarisation égale à -100V. Le circuit d'alimentation 4 alimente les circuits électriques 10 et 11 de la caméra 1 et 12 et 13 du châssis récepteur 2 avec, par exemple, une alimentation +/-12V, 40mA. Le circuit de traitement 6 comprend un ensemble de discriminateurs D1 à D8, un ensemble de compteurs C1 à C8 et une unité d'acquisition de données 14.

Le détecteur 9 est un milieu matériel dans lequel les photons P émis par le plasma cèdent tout ou partie de leur énergie. L'énergie cédée dans le détecteur est convertie en impulsions électriques. Le traitement des impulsions provenant des détecteurs est alors effectué par une chaîne électronique de comptage spécialement optimisée pour le CdTe. La collecte des porteurs de charges dans le semi conducteur est assurée par le préamplificateur 10. L'émetteur différentiel 11 transmet le signal délivré par le préamplificateur 10, via le récepteur différentiel 12, à l'amplificateur linéaire 13, plus communément appelé « shaper ». La fonction du shaper est de transformer les impulsions reçues, possédant en général un temps de relaxation assez long et risquant, de ce fait, de se chevaucher si le taux de comptage devient trop élevé, en impulsions relativement brèves faciles à compter pour le reste de la chaîne d'acquisition. Le gain du shaper peut être ajusté manuellement pour la calibration en énergie du signal.

En phase de mesure, le commutateur 8 relie la sortie du châssis récepteur 2 à l'entrée du circuit de traitement 6. L'analyse de la hauteur des impulsions reçues est alors effectuée par les huit discriminateurs intégraux D1-D8. Les discriminateurs intégraux D1-D8 envoient des signaux logiques vers les compteurs C1-C8 auxquels ils sont reliés, lorsque l'amplitude du front de montée de l'impulsion est supérieure à un seuil de discrimination. La réception du signal logique par un compteur Ci (i=1, 2, ..., 8) ajoute 1 à la mémoire tampon du compteur Ci qui contient, en conséquence, le nombre de coups enregistrés avec une énergie supérieure au seuil de discrimination. A chaque pas d'échantillonnage (par exemple un pas de 16ms), la mémoire tampon de chaque compteur est lue puis remise a zéro par l'unité d'acquisition de données 14 qui transmet les huit résultats de comptage dans l'unité de stockage de données 7. Un circuit électronique de diagnostic de spectrométrie est décrit dans le document GB2332512 A.

Ce système présente plusieurs inconvénients.

Tout d'abord, aucune information concernant le signal d'entrée n'est disponible, ce qui empêche toute visualisation de l'impulsion mise en forme et ne permet pas de distinguer d'éventuels empilements consécutifs à l'arrivée simultanée de deux photons sur le détecteur. Ensuite, les signaux mesurés ne sont pas disponibles en temps réel, ce qui interdit toute inversion de profil en temps réel et, partant, tout asservissement du dépôt de puissance de l'onde hybride et tout asservissement du profil de courant.

Pour obtenir des mesures fiables, une étape de calibration est nécessaire. La sortie du châssis récepteur 2 est alors connectée à l'entrée du circuit de calibration 5.

La calibration consiste à ajuster le gain du circuit shaper de façon à avoir une bonne correspondance entre l'amplitude de l'impulsion délivrée par le châssis récepteur 2 et l'énergie du photon incident. Comme cela a été mentionné précédemment, le système tomographique de l'art connu comprend deux caméras, l'une verticale et l'autre horizontale, comprenant, respectivement, 21 détecteurs pour la caméra verticale et 38 détecteurs pour la caméra horizontale, soit un total de 59 détecteurs. La calibration est alors effectuée pour chaque détecteur.

La calibration est essentielle pour pouvoir obtenir une reconstruction précise des profils d'émissivité X dans les différents canaux d'énergie. La calibration peut alors être effectuée à l'aide d'un spectromètre numérique à 1024 canaux et en utilisant trois sources radioactives. Le gain du shaper est alors réglé de façon à placer le pic principal de chaque source à la bonne énergie.

L'étape de calibration présente également des inconvénients. Elle nécessite la déconnexion d'une partie de l'électronique de la chaîne d'acquisition qui n'est alors pas prise en compte dans la calibration. Il peut alors en résulter des erreurs de calibration. Par ailleurs, cette déconnexion augmente les manipulations effectuées sur le système et, partant, les risques de détérioration de celui-ci. D'autre part, la caméra 1 est éloignée du système d'acquisition sur lequel on connecte le banc de calibration. Cela impose alors à l'opérateur de faire de nombreux va-et-vient lorsqu'il doit modifier le positionnement de la source par rapport à la caméra.

Le circuit électronique de diagnostic de spectrométrie selon l'invention ne présente pas les inconvénients mentionnés ci-dessus.

Exposé de l'invention

En effet, l'invention concerne un circuit électronique de diagnostic de spectrométrie comprenant des moyens de détection de données numériques correspondant à des impulsions détectées et des moyens de mesure d'amplitude pour associer une amplitude mesurée à une impulsion détectée. Le circuit électronique de diagnostic comprend des moyens de rejet d'impulsions pour rejeter, à partir des données numériques détectées, toute impulsion dont la largeur dépasse un seuil de largeur d'impulsion et, pendant un intervalle de temps programmé, toute nouvelle impulsion, dès lors qu'une première impulsion a été détectée durant l'intervalle de temps programmé.

Selon une caractéristique supplémentaire de l'invention, le circuit électronique de diagnostic de spectrométrie comprend des moyens de calibration comprenant une mémoire d'histogramme pour classer, par tranche d'énergie de calibration, lorsque les impulsions détectées proviennent d'une source étalon, les données numériques qui correspondent aux impulsions détectées qui n'ont pas été rejetées par les moyens de rejet d'impulsions.

Selon encore une caractéristique supplémentaire de l'invention, le circuit électronique de diagnostic de spectrométrie comprend :

- des moyens de tri pour trier, par tranches d'énergie de détection, d'une part, l'ensemble des impulsions détectées et, d'autre part, les impulsions détectées qui n'ont pas été rejetées par les moyens de rejet d'impulsions, et

- des moyens de comptage pour compter, par tranches d'énergie de détection, d'une part, l'ensemble des impulsions détectées et, d'autre part, les impulsions détectées qui n'ont pas été rejetées par les moyens de rejet d'impulsions.

Selon encore une caractéristique supplémentaire de l'invention, le circuit électronique de diagnostic de spectrométrie comprend au moins une mémoire déroulante qui stocke les données numériques à une cadence configurable.

Selon encore une caractéristique supplémentaire de l'invention, le circuit électronique de diagnostic de spectrométrie comprend des moyens pour ne pas prendre en compte les impulsions dont l'amplitude mesurée est inférieure à une valeur de seuil d'amplitude.

Selon encore une caractéristique supplémentaire de l'invention, le circuit électronique de diagnostic de spectrométrie comprend au moins un amplificateur d'entrée pour amplifier des impulsions analogiques détectées et au moins un convertisseur analogique/numérique pour convertir en lesdites données numériques les impulsions analogiques détectées.

Selon encore une caractéristique supplémentaire de l'invention, la mémoire déroulante mémorise l'historique des données issues du convertisseur analogique/numérique.

L'invention concerne également une chaîne de comptage de particules comprenant des moyens de détection de particules pour former des impulsions détectées et des moyens de traitement des impulsions détectées. Les moyens de traitement comprennent un circuit électronique de diagnostic de spectrométrie selon l'invention.

Selon une caractéristique supplémentaire de l'invention, les moyens de traitement comprennent une mémoire vive partagée reliée à un réseau de communication.

Selon une caractéristique supplémentaire de l'invention, les particules sont des rayons X durs.

Les moyens de rejet d'impulsions du circuit électronique de diagnostic selon l'invention présentent de nombreux avantages. En combinaison avec les moyens de calibration de l'invention, ils permettent la mise en oeuvre d'une calibration in situ, sans démontage ni déconnexion de la chaîne de mesure, ce qui diminue très sensiblement les risques d'erreurs. Il est alors possible de réaliser, de façon routinière, des calibrations de grande qualité en milieu hostile. La calibration peut concerner la totalité des voies de visées. Egalement, en combinaison avec les moyens de tri et de comptage de l'invention, les moyens de rejet d'impulsions de l'invention permettent la mise en oeuvre d'une discrimination et d'un comptage en temps réel des impulsions détectées. La mesure en temps réel des impulsions détectées présente comme avantage principal de pouvoir obtenir, à l'aide d'un programme adapté, un profil d'émissivité local par inversion, par une méthode d'Abel, des données temps réel. Des asservissements du profil des suprathermiques sont alors envisageables avec comme conséquence un contrôle direct du profil de courant, ce qui répond bien à l'objectif fixé pour un « tokamak avancé ».

Brève description des figures

D'autres caractéristiques et avantages de l'invention apparaîtront à la lecture d'un mode de réalisation préférentiel de l'invention fait en référence aux figures jointes, parmi lesquelles :

- la figure 1 représente une chaîne de mesure de diagnostic de spectrométrie X-dur selon l'art antérieur ;
- la figure 2 représente une chaîne de mesure de diagnostic de spectrométrie selon l'invention ;
- la figure 3 représente un schéma de principe d'un exemple de circuit électronique de diagnostic selon l'invention ;
- la figure 4 est une représentation typique d'impulsion telle qu'elle arrive en entrée d'un circuit électronique de diagnostic selon l'invention ;
- la figure 5 représente un schéma détaillé d'un exemple de voie de traitement de circuit électronique de diagnostic selon l'invention ;

- la figure 6 représente un histogramme de calibration obtenu à l'aide d'un circuit électronique de diagnostic selon l'invention ;
- la figure 7 représente un schéma de principe d'un perfectionnement du circuit électronique de diagnostic selon l'invention représenté en figure 3.

Sur toutes les figures, les mêmes repères désignent les mêmes éléments.

Description détaillée de modes de mise en oeuvre de l'invention.

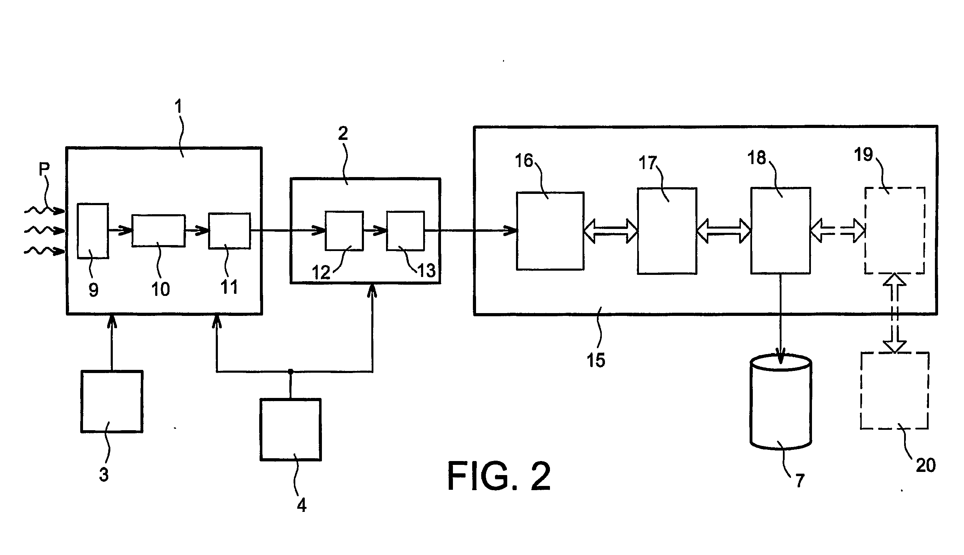

La figure 2 représente pour une voie une chaîne de mesure de diagnostic de spectrométrie par rayonnement, par exemple des rayons X durs, selon l'invention.

La chaîne de mesure comprend une caméra 1, un châssis récepteur 2, un circuit de polarisation 3, un circuit d'alimentation 4, un circuit de traitement de données 15 et une unité de stockage de données 7. La chaîne de mesure selon l'invention se distingue de la chaîne de mesure selon l'art antérieur par le circuit de traitement de données 15. Le circuit de traitement de données 15 comprend, en série, un circuit électronique de diagnostic selon l'invention 16, une unité d'acquisition et de traitement de données 17 et une unité de gestion 18. Selon un perfectionnement de l'invention, le circuit de traitement de données 15 peut également contenir une mémoire vive partagée 19. La mémoire vive partagée 19, par exemple une carte SCRAMNET (SCRAMNET pour « Shared Common Random Access Memory Network »), permet alors avantageusement un partage des données avec d'autres unités d'acquisition à travers un réseau de communication 20.

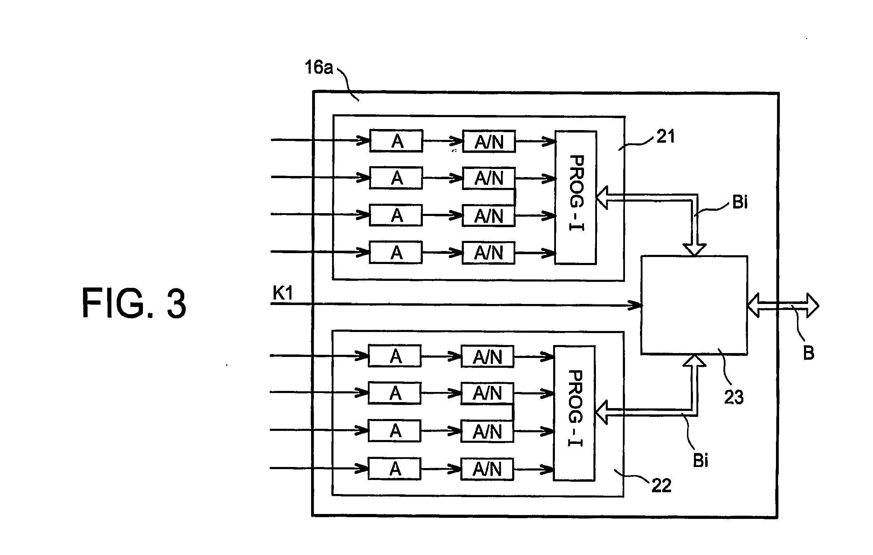

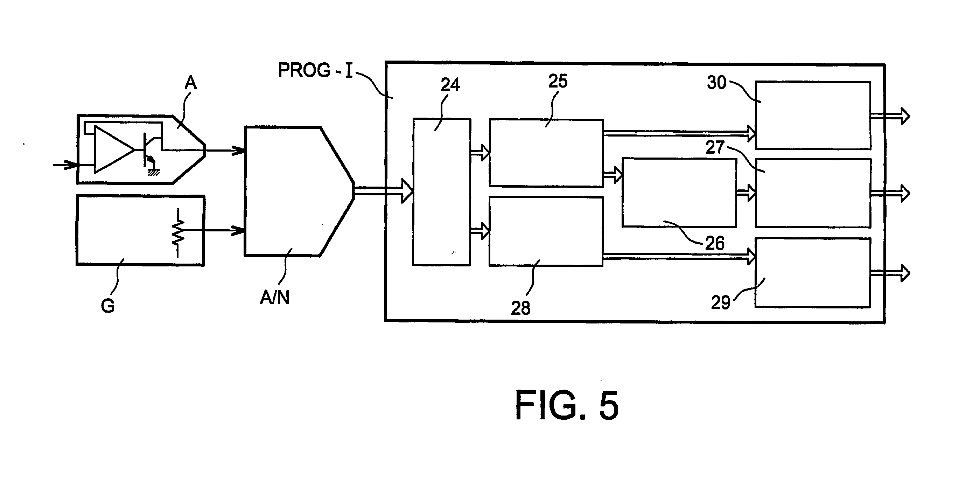

La figure 3 représente un schéma de principe d'un exemple de circuit électronique de diagnostic 16a selon l'invention. Le circuit de traitement 16a comprend deux blocs de traitement de données 21, 22 et un composant programmable logique d'interface et de contrôle 23. Chaque bloc de traitement de données 21, 22 est relié au composant programmable logique d'interface et de contrôle 23 par un bus Bi interne à la carte. Un bloc de traitement de données comprend, par exemple, quatre amplificateurs A d'entrée en parallèle, quatre convertisseurs analogiques/numériques A/N montés en série avec les quatre amplificateurs d'entrée et un composant programmable logique de traitement des impulsions PROG-I. Le composant programmable logique d'interface et de contrôle 23 est commandé par une commande K1 qui rythme l'acquisition des données. Un bus VME B (VME pour « Virtual Machine Electronic ») relie le composant programmable logique d'interface et de contrôle 23 à l'unité d'acquisition et de traitement de données 17 (non représentée sur la figure 3), laquelle est également reliée à l'unité de gestion 18 (non représentée sur la figure 3) par ce même bus VME B. Chaque composant programmable logique de traitement des impulsions PROG-I met en oeuvre, sur les données numériques qu'il reçoit, un ensemble d'opérations qui sont présentées plus en détail ci-dessous, en description de la figure 5.

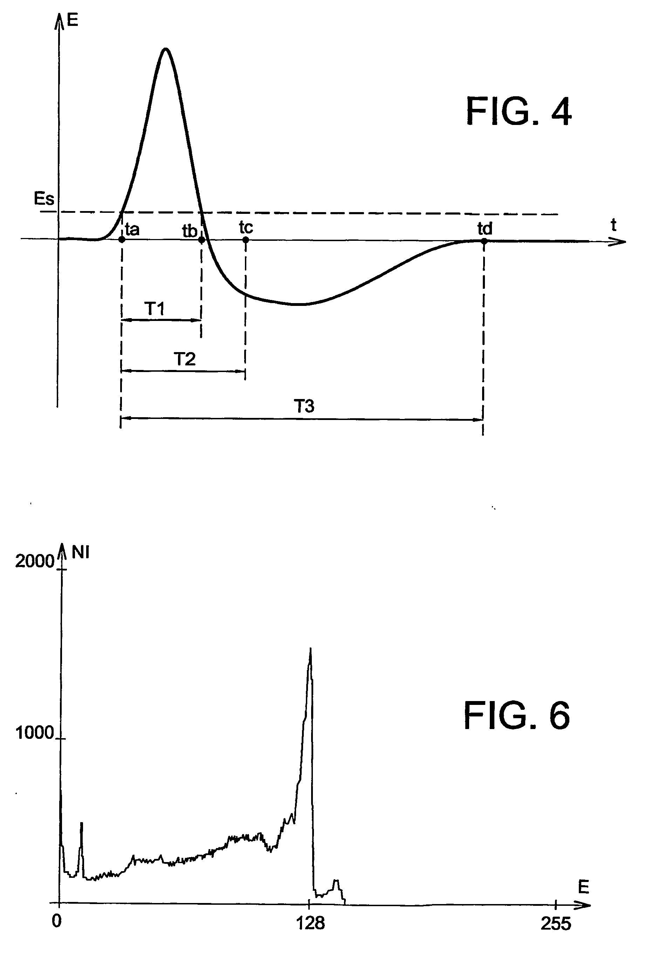

La figure 4 est une représentation typique du signal tel qu'il arrive en entrée du circuit électronique de diagnostic selon l'invention et la figure 5 représente un schéma détaillé d'une voie de traitement du signal représenté en figure 4.

La courbe de la figure 4 représente l'énergie E du signal en fonction du temps t. La courbe de l'énergie E comprend une partie positive de forme impulsionnelle et une partie négative. La partie « utile » du signal est la partie positive. La durée de la partie positive est de l'ordre de la microseconde. La partie négative, dont la durée est de l'ordre de quelques microsecondes (typiquement 3 ou 4 $\mu$s), est due à l'électronique de traitement. Plusieurs paramètres temporels apparaissent sur la figure 4 (ta, tb, tc, td, T1, T2, T3) qui seront explicités dans la suite de la description.

La figure 5 représente le schéma détaillé d'une voie de traitement 21, 22.

Un bloc de traitement 21, 22 comprend plusieurs voies de traitement. C'est pour des raisons de commodité, afin de ne pas alourdir la figure, que la figure 5 ne représente qu'une seule voie de traitement constituée d'un seul amplificateur d'entrée A, d'un seul convertisseur analogique/numérique A/N, d'un circuit G de réglage de gain du convertisseur et de la fraction de composant programmable logique de traitement d'impulsions PROG-I associée.

Le composant PROG-I comprend les blocs fonctionnels suivants :

- un bloc de détection d'impulsions et de mesure d'amplitude des impulsions détectées 24,
- un bloc de rejet d'empilements 25,
- deux blocs de tri par tranche d'énergie 26, 28,
- deux blocs de compteurs numériques 27, 29 et
- une mémoire d'histogramme 30.

Outre la fonction d'amplification, l'amplificateur d'entrée A assure une fonction d'adaptation d'impédance et supprime la partie négative du signal reçu (cf. figure 4). Le convertisseur analogique numérique A/N quantifie le signal issu de l'amplificateur A. Le circuit G de réglage de gain permet de programmer le gain du convertisseur via un bus VME. La programmation du gain du convertisseur est mise en oeuvre lors de l'étape de calibration. Le bloc de traitement 24 assure, d'une part, la détection des impulsions et, d'autre part, la mesure de l'amplitude des impulsions. Selon un mode de réalisation préférentiel de l'invention, afin de s'affranchir du bruit sur la mesure, un seuil d'énergie d'impulsion Es est pris en compte lors de la détection (cf. figure 4). Les impulsions dont le niveau d'énergie est supérieur ou égal au seuil Es sont prises en compte alors que celles dont le niveau d'énergie est inférieur sont éliminées. Lorsqu'une impulsion a été prise en compte, sa largeur T1 est mesurée (cf. figure 4). L'instant à partir duquel la largeur d'une impulsion est mesurée est l'instant ta au-delà duquel l'énergie de l'impulsion croît au-delà du seuil Es. L'instant tb à partir duquel l'amplitude de l'impulsion passe en dessous du seuil Es permet alors de définir la largeur $T_1$ de l'impulsion qui s'écrit :

$$T1 = tb - ta$$

Un seuil temporel tc de largeur d'impulsion permet de trier les impulsions en fonction de leur largeur. La largeur maximale T2 d'une impulsion (T2=tc-ta) peut alors être égale, par exemple, à 1,5 $\mu$s.

L'instant de départ ta à partir duquel est mesurée la largeur de l'impulsion est également le point de départ d'un délai programmable T3 durant lequel toute nouvelle impulsion n'est pas comptabilisée. Le délai T3 peut être, par exemple, égal à 5 $\mu$s. L'instant programmable td qui borne le délai T3 (T3 = td - ta) peut correspondre, par exemple, à l'instant où l'impulsion d'origine, c'est-à-dire l'impulsion avant la suppression de sa partie négative, revient sensiblement à zéro (cf. figure 4).

Le bloc de rejet d'empilements 25 rejette toute impulsion dont la largeur dépasse le seuil de largeur d'impulsion tc et, pendant un intervalle de temps programmé, par exemple l'intervalle T3, toute nouvelle impulsion dès lors qu'une première impulsion a été détectée. Les impulsions qui ne sont pas rejetées par le bloc de rejet d'empilements 25 sont prises en compte et triées par tranches d'énergie programmables (bloc de tri 26). Les tranches d'énergie peuvent prendre, par exemple, les valeurs suivantes :

- [20kev-40kev[,
- [40kev-60kev[,
- [60kev-80kev[,
- [80kev-100kev[,
- [100kev-120kev[,
- [120kev-140kev[,
- [140kev-160kev[,
- ≥ 160kev.

Les impulsions de chaque tranche d'énergie sont alors comptées dans le bloc de comptage 27. Dans le cas où, par exemple, il y a huit tranches d'énergie telles que mentionnée ci-dessus, le bloc de comptage 27 peut comprendre huit compteurs 12 bits, c'est-à-dire un compteur par tranche d'énergie. Seul le compteur associé à la tranche d'énergie détectée pour l'impulsion en cours est incrémenté.

Les impulsions détectées qui ont été rejetées sont également triées par tranches d'énergie de sorte que c'est l'ensemble des impulsions détectées qui sont également triées (bloc de tri 28) et comptées (bloc de comptage 29).

La mémoire d'histogramme 30 intervient lors des mesures de calibration. Le circuit électronique de diagnostic de spectrométrie est alors placé en mode calibration.

Le procédé de calibration va maintenant être décrit. Une acquisition de données à partir d'un stimulus extérieur connu (source étalon) est lancée. La mémoire d'histogramme 30 trie le signal par tranche d'énergie de calibration. Une tranche d'énergie de calibration peut être, par exemple, de l'ordre de 1kev. Seules les impulsions triées après rejet d'empilement sont ici prises en compte. Chaque impulsion entrant dans la mémoire d'histogramme incrémente une case mémoire correspondant à l'amplitude maximale de son énergie. Il est alors possible de rechercher dans quelle case ou groupe de cases se situe le plus grand nombre d'impulsions. Une action sur le réglage du gain permet alors, via le bus VME, de faire coïncider de manière automatique ce maximum avec l'énergie attendue et connue de la source étalon.

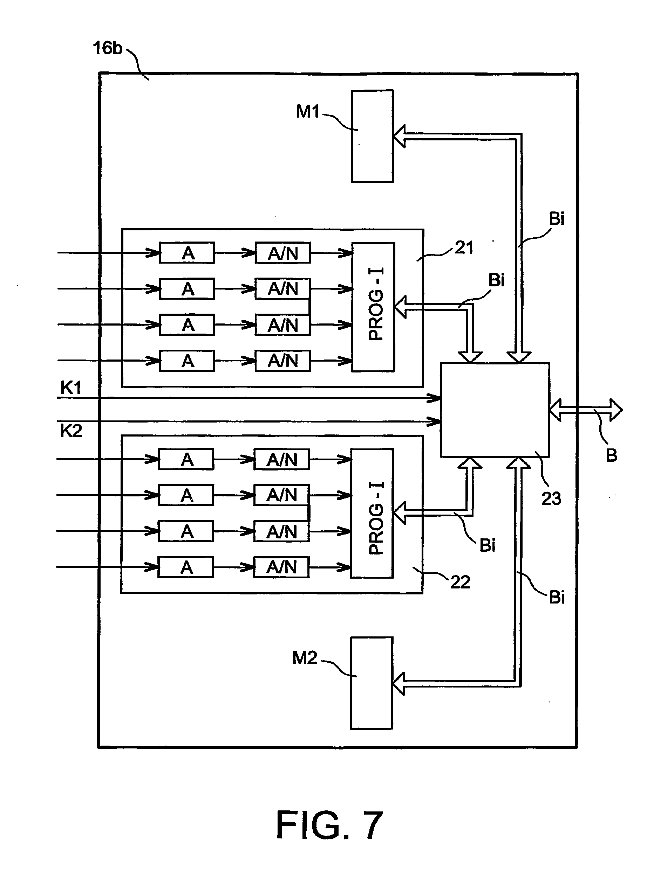

La figure 6 est un exemple de contenu de la mémoire d'histogramme. On observe en abscisse les différents nivaux d'énergie E et en ordonnée le nombre NI d'impulsions collectées pour chaque niveau d'énergie.

La figure 7 représente un circuit électronique de diagnostic de spectrométrie selon un perfectionnement de l'invention.

Le circuit électronique de diagnostic selon le perfectionnement de l'invention comprend, outre les éléments décrits ci-dessus en référence à la figure 3, deux mémoires tampon déroulantes M1 et M2 qui reçoivent, sur leurs entrées, les données numériques délivrées par les blocs de traitement respectifs 21 et 22. Un bus interne Bi relie chaque mémoire déroulante M1, M2 au composant programmable logique d'interface et de contrôle 23. Une commande K2 appliquée au composant programmable logique 23 permet de déclencher le stockage des données issues des blocs de traitement 21 et 22 dans les mémoires déroulantes respectives M1 et M2. Les mémoires déroulantes M1 et M2 mémorisent, par exemple, l'historique des données issues des convertisseurs A/N inclus dans les blocs de traitement respectifs 21 et 22 à une cadence configurable par l'intermédiaire du bus VME B, ou encore l'historique de l'évolution des états des compteurs 27, 29 à une cadence configurable par le bus B, cette dernière pouvant être plus élevée que la cadence d'acquisition de base, permettant ainsi d'observer l'évolution des compteurs entre deux acquisitions.

**Revendications**

1. Circuit électronique de diagnostic de spectrométrie comprenant des moyens de détection de données numériques correspondant à des impulsions détectées et des moyens de mesure d'amplitude pour associer une amplitude mesurée à une impulsion détectée (24), **caractérisé en ce qu'**il comprend des moyens de rejet d'impulsions (25) pour rejeter, à partir des données numériques détectées, toute impulsion dont la largeur dépasse un seuil de largeur d'impulsion (tc) et, pendant un intervalle de temps programmé (T3), toute nouvelle impulsion, dès lors qu'une première impulsion a été détectée durant l'intervalle de temps programmé .

2. Circuit électronique de diagnostic de spectrométrie selon la revendication 1, **caractérisé en ce qu'**il comprend des moyens de calibration comprenant une mémoire d'histogramme (30) pour classer, par tranche d'énergie de calibration, lorsque les impulsions détectées proviennent d'une source étalon, les données numériques qui correspondent aux impulsions détectées qui n'ont pas été rejetées par les moyens de rejet d'impulsions.

3. Circuit électronique de diagnostic de spectrométrie selon la revendication 1 ou 2, **caractérisé en ce qu'**il comprend :

   - des moyens de tri (28, 26) pour trier par tranches d'énergie de détection, d'une part, l'ensemble des impulsions détectées et, d'autre part, les impulsions détectées qui n'ont pas été rejetées par les moyens de rejet d'impulsions (25), et
   - des moyens de comptage (29, 27) pour compter, par tranches d'énergie de détection, d'une part, l'ensemble des impulsions détectées et, d'autre part, les impulsions détectées qui n'ont pas été rejetées par les moyens de rejet d'impulsions (25).

4. Circuit électronique de diagnostic de spectrométrie selon l'une quelconque des revendications précédentes, **caractérisé en ce qu'**il comprend au moins une mémoire déroulante (M1, M2) qui stocke les données numériques à une cadence configurable (K2).

5. Circuit électronique de diagnostic de spectrométrie selon l'une quelconque des revendications précédentes, **caractérisé en ce qu'**il comprend des moyens pour ne pas prendre en compte les impulsions dont l'amplitude mesurée est inférieure à une valeur de seuil d'amplitude (Es) .

6. Circuit électronique de diagnostic de spectrométrie selon l'une quelconque des revendications précédentes, **caractérisé en ce qu'**il comprend au moins un amplificateur d'entrée (A) pour amplifier des impulsions analogiques détectées et au moins un convertisseur analogique/numérique (A/N) pour convertir en lesdites données numériques les impulsions analogiques détectées.

7. Circuit électronique de diagnostic de spectrométrie selon la revendication 6, **caractérisé en ce que** la mémoire déroulante (M1, M2) mémorise l'historique des données issues du convertisseur analogique/numérique (A/N).

8. Chaîne de comptage de particules comprenant des moyens de détection de particules pour former des impulsions détectées et des moyens de traitement (15) des impulsions détectées, **caractérisée en ce que** les moyens de traitement (15) comprennent un circuit électronique de diagnostic de spectrométrie selon l'une quelconque des revendications 1 à 7.

9. Chaîne de comptage de particules selon la revendication 8, **caractérisée en ce que** les moyens de traitement (15) comprennent une mémoire vive partagée (19) reliée à un réseau de communication (20).

10. Chaîne de comptage de particules selon l'une des revendications 8 ou 9, **caractérisée en ce que** les particules sont des rayons X durs.

## Claims

1. Spectrometry diagnostic electronic circuit comprising digital data detection means corresponding to detected pulses and amplitude measurement means to associate a measured amplitude with a detected pulse (24), wherein pulse rejection means (25) use detected digital data to reject every pulse with a width that exceeds a pulse width threshold (tc) and any new pulse during a programmed time interval (T3), if a first pulse has been detected during the programmed time interval.

2. Spectrometry diagnostic electronic circuit set forth in claim 1, wherein calibration means include a histogram memory (30) to sort digital data corresponding to the detected pulses that were not rejected by the pulse rejection means, by calibration energy range when the detected pulses originate from a standard source.

3. Spectrometry diagnostic electronic circuit set forth in either claim 1 or 2, wherein:

   - sort means (28, 26) sort firstly all detected pulses and secondly detected pulses that were not rejected by the pulse rejection means, by detection energy range (25), and
   - count means (29, 27) count firstly all detected pulses and secondly detected pulses that were not rejected by the pulse rejection means, by detection energy range (25).

4. Spectrometry diagnostic electronic circuit according to claim 1, wherein at least one circular memory (M1, M2) stores digital data at a configurable rate (K2).

5. Spectrometry diagnostic electronic circuit according to claim 1, wherein means for excluding pulses exclude pulses for which the measured amplitude is less than an amplitude threshold value (Es).

6. Spectrometry diagnostic electronic circuit according to claim 1, wherein at least one input amplifier (A) amplifies detected analogue pulses and at least one analogue/digital converter (A/N) converts the detected analogue pulses into said digital data.

7. Spectrometry diagnostic electronic circuit set forth in claim 6, wherein the circular memory (M1, M2) memorises the history of data output from the analogue/digital converter (A/N).

8. Particle counting system including particle detection means to form detected pulses and means (15) of processing the detected pulses, wherein the processing means (15) include a spectrometry diagnostic electronic circuit set forth in any of claims 1 to 7.

9. Particle counting system set forth in claim 8, wherein the processing means (15) include a shared random access memory (19) connected to a communication network (20).

10. Particle counting system set forth in either claim 8 or 9, wherein the particles are hard X-rays.

## Patentansprüche

1. Elektronische Spektrometrie-Diagnoseschaltung mit Einrichtungen zur Detektion von digitalen Daten, die detektierten Impulsen entsprechen, und Einrichtungen zur Amplitudenmessung, um eine gemessene Amplitude einem detektierten Impuls zuzuordnen (24),
   **dadurch gekennzeichnet, dass** sie Impulsausschließungseinrichtungen (25) umfasst, um aufgrund detektierter digitaler Daten jeden Impuls auszuschließen, dessen Breite einen Impulsbreiten-Schwellenwert (tc) überschreitet, und während eines programmierten Zeitintervalls (T3) jeden neuen Impuls auszuschließen, wenn während des programmierten Zeitintervalls ein erster Impuls detektiert worden ist.

2. Elektronische Spektrometrie-Diagnoseschaltung nach Anspruch 1, **dadurch gekennzeichnet, dass** sie Kalibriereinrichtungen mit einem Histogramm-Speicher (30) umfasst, um - wenn die detektierten Impulse von einer Eichquelle stammen - mittels Kalibrierungsenergiescheibe die digitalen Daten zu klassieren, die den detektierten Impulsen entsprechen, die nicht durch die Impulsausschließungseinrichtungen ausgeschlossen worden sind.

3. Elektronische Spektrometrie-Diagnoseschaltung nach Anspruch 1 oder 2, **dadurch gekennzeichnet, dass** sie umfasst:

- Klassierungseinrichtungen (28, 26), um mittels Detektionsenergiescheiben einerseits alle detektierten Impulse zu klassieren und andererseits die Impulse, die durch die Impulsausschließungseinrichtungen (25) nicht ausgeschlossen worden sind, und
- Zähleinrichtungen (29, 27), um mittels Detektionsenergiescheiben einerseits alle detektierten Impulse zu zählen und andererseits die Impulse, die durch die Impulsausschließungseinrichtungen (25) nicht ausgeschlossen worden sind.

4. Elektronische Spektrometrie-Diagnoseschaltung nach einem der vorangehenden Ansprüche, **dadurch gekennzeichnet, dass** sie wenigstens einen Ablaufspeicher (M1, M2) umfasst, der die digitalen Daten mit einem konfigurierbaren Takt abspeichert (K2).

5. Elektronische Spektrometrie-Diagnoseschaltung nach einem der vorangehenden Ansprüche, **dadurch gekennzeichnet, dass** sie Einrichtungen umfasst, die verhindern, dass sie Impulse berücksichtigt, deren gemessene Amplitude kleiner ist als ein Amplitudenschwellenwert (Es).

6. Elektronische Spektrometrie-Diagnoseschaltung nach einem der vorangehenden Ansprüche, **dadurch gekennzeichnet, dass** sie wenigstens einen Eingangsverstärker (A) umfassen, um detektierte analoge Impulse zu verstärken, und wenigstens einen Analog-Digital-Wandler (A/N), um die detektierten analogen Signale umzuwandeln in die genannten digitalen Daten.

7. Elektronische Spektrometrie-Diagnoseschaltung nach Anspruch 6, **dadurch gekennzeichnet, dass** der Ablaufspeicher (M1, M2) die Historie der von dem Analog-Digital-Wandler (A/N) stammenden Daten speichert.

8. Partikelzählkette mit Einrichtungen zur Detektion von Partikeln um detektierte Impulse zu bilden und Verarbeitungseinrichtungen (15) der detektierten Impulse, **dadurch gekennzeichnet, dass** die Verarbeitungseinrichtungen (15) eine elektronische Spektrometrie-Diagnoseschaltung nach einem der Ansprüche 1 bis 7 umfassen.

9. Partikelzählkette nach Anspruch 8, **dadurch gekennzeichnet, dass** die Verarbeitungseinrichtungen (15) einen geteilten Lebend- bzw. Arbeitsspeicher (19) umfassen, der mit einem Kommunikationsnetz (20) verbunden ist.

10. Partikelzählkette nach einem der Ansprüche 8 oder 9, **dadurch gekennzeichnet, dass** die Partikel harte Röntgenstrahlen sind.

FIG.1

EP 1 718 992 B1

FIG. 2

FIG. 3

FIG. 4

FIG. 6

FIG. 5

16b

M1

Bi

A → A/N

A → A/N

A → A/N    PROG-I    21

A → A/N              Bi

K1

K2

A → A/N

A → A/N

A → A/N    PROG-I

A → A/N              22    Bi

B

23

Bi

M2

# FIG. 7

**RÉFÉRENCES CITÉES DANS LA DESCRIPTION**

**Documents brevets cités dans la description**

- GB 2332512 A

**Littérature non-brevet citée dans la description**

- **PEYSSON et al.** *Revue of Science Instrument,* 1999, (10), 70